# FASCICULE DE BREVET EUROPEEN

(11) **EP 0 502 752 B1**
(45) Date de publication et mention de la délivrance du brevet: **18.09.1996**
(21) Numéro de dépôt: 92400141.5
(22) Date de dépôt: 20.01.1992
(51) Int. Cl.: G01N 21/64

(54) **Appareil de spectrométrie**
Spektralapparat
Spectroscopic apparatus

(30) Priorité: 04.03.1991 FR 9102558
(43) Date de publication de la demande: 09.09.1992
(73) Titulaire: DILOR, F-59000 Lille (FR)
(72) Inventeur: Delhaye Michel, 59943 Villeneuve D'Ascq (FR); Barbillat, Jacques, 59650 Villeneuve D'Ascq (FR); Da Silva, Edouard, 59000 Lille (FR)
(74) Mandataire: Plaçais, Jean-Yves

(56) Documents cités:
- EP-A- 0 168 643
- EP-A- 0 440 342
- DE-A- 3 936 646
- FR-A- 2 356 931
- FR-A- 2 449 275
- GB-A- 2 184 321
- US-A- 4 284 897
- US-A- 4 407 008

## Description

L'invention se rapporte au domaine de la spectrométrie.

Elle trouve une application générale en spectrométrie instrumentale et notamment en spectrométrie d'absorption, d'émission, de diffusion, de transmission, de réflexion, de fluorescence, de luminescence, RAMAN, etc.

On connaît déjà des appareils de spectrométrie.

Généralement de tels appareils comprennent :
- des moyens pour produire une lumière d'excitation cohérente ;
- au moins un premier échantillon ;
- un spectromètre possédant une ouverture d'entrée ;
- des moyens séparateurs propres à recevoir et séparer le faisceau d'excitation cohérent en une première partie réfléchie RFE supérieure à 0 et inférieure à 1 et une seconde partie transmise TFE avec sensiblement RFE + TFE = 1 ;
- des premiers moyens de couplage optique propres à conduire la seconde partie transmise TFE ou la première partie réfléchie RFE du faisceau d'excitation cohérent sur le premier échantillon, ainsi qu'à recueillir le faisceau de diffusion incohérent de longueur d'onde différente de celle du faisceau d'excitation qui en résulte, les moyens séparateurs étant propres à séparer ledit faisceau de diffusion incohérent en une première partie réfléchie RFD supérieure à 0 et inférieure à 1 et en une seconde partie transmise TFD avec sensiblement RFD + TFD = 1 ; et
- des seconds moyens de couplage optique propres à conduire la première partie réfléchie RFD ou la seconde partie transmise TFD du faisceau de diffusion incohérent vers l'ouverture d'entrée du spectromètre.

On entend ici par "spectromètre", tout instrument d'analyse dispersif du type spectromètre et ses équivalents tels que les monochromateurs.

Par lumière excitatrice, il faut comprendre ici une lumière excitatrice issue d'une source telle qu'une source laser, une source blanche, une source xénon ou mercure, etc. L'adjectif "cohérent" distingue ici la lumière excitatrice de la lumière de diffusion incohérente qui résulte de l'éclairement de l'échantillon par ladite lumière excitatrice.

Le Demandeur s'est posé le problème de réaliser un appareil de spectrométrie permettant d'améliorer le faisceau de diffusion incohérent de longueur d'onde différente de celle du faisceau d'excitation qui est reçu par l'ouverture d'entrée du spectromètre et qui comprend les informations d'analyse.

L'invention vient justement apporter une solution à ce problème. L'invention part d'un appareil de spectrométrie du type mentionné ci-avant.

Elle se distingue de cet etat de la technique par l'utilisation de premiers et seconds moyens de couplage optique tels que définis dans la partie caractérisante de la revendication 1.

Il est à remarquer ici que le montage mentionné ci-avant relatif aux premiers et seconds moyens de couplage optique, a l'avantage de réaliser un microscope de spectrométrie de type confocal, lorsque l'échantillon est placé sous l'objectif d'un microscope.

Selon un mode préféré de réalisation de l'invention, les premiers moyens de couplage optique conduisent en outre la première partie réfléchie ou la seconde partie transmise du faisceau d'excitation cohérent sur le premier échantillon, les moyens séparateurs étant propres en outre à séparer le faisceau de diffusion incohérent qui résulte de l'éclairement dudit premier échantillon par la première partie réfléchie ou la seconde partie transmise du faisceau d'excitation en une première partie réfléchie et une seconde partie transmise et à conduire ladite seconde partie transmise ou ladite première partie réfléchie dudit faisceau de diffusion incohérent sur l'ouverture d'entrée du spectromètre.

Selon un autre mode de réalisation préféré de l'invention, l'appareil comprend en outre un second échantillon, et les premiers moyens de couplage optique conduisent en outre la première partie réfléchie ou la seconde partie transmise du faisceau d'excitation cohérent sur ledit second échantillon, les moyens séparateurs étant propres à séparer en outre le faisceau de diffusion incohérent qui résulte de l'éclairement du second échantillon par la première partie réfléchie ou la seconde partie transmise du faisceau d'excitation en une première partie réfléchie et une seconde partie transmise et à conduire ladite seconde partie transmise ou ladite première partie réfléchie dudit faisceau de diffusion incohérent sur l'ouverture d'entrée du spectromètre.

Une telle structure a l'avantage d'utiliser de façon optimale les parties réfléchie et transmise du faisceau d'excitation issues des moyens séparateurs et les faisceaux de diffusion qui résulte de l'éclairement du premier échantillon seul ou des premier et second échantillons par lesdites parties réfléchie et transmise du faisceau d'excitation.

Une telle structure permet en outre de réaliser une comparaison des spectres sans aucun déplacement des premiers moyens de couplage optique.

En pratique, la comparaison du spectre du premier échantillon avec le spectre du second échantillon est réalisée à l'aide de premiers moyens formant obturateur pour la première partie réfléchie du faisceau d'excitation cohérent et à l'aide de seconds moyens formant obturateur pour la seconde partie transmise du faisceau d'excitation cohérent.

De préférence, il est prévu un porte-échantillon monté en translations horizontale et verticale et des moyens de commande propres à piloter les translations horizontale ou verticale dudit porte-échantillon.

Selon un aspect de l'invention, les moyens séparateurs comprennent une lame séparatrice de type dichroïque, c'est- à-dire dont le pouvoir séparateur est fonction de la longueur d'onde du faisceau incident, ce qui permet d'acquérir les raies Stokes, les raies anti-Stokes et le signal basse fréquence du signal RAMAN.

La présente invention a également pour objet un dispositif de spectrométrie à balayage confocal pour l'analyse spatiale de la distribution d'espèces chimiques dans un échantillon.

Selon une caractéristique importante du dispositif selon la présente invention, le dispositif comprend en combinaison :
- des moyens pour produire une lumière d'excitation cohérente selon un axe d'entrée ;
- des premiers moyens formant diaphragme comprenant une première ouverture variable choisie pour filtrer spatialement le faisceau d'excitation cohérent ;
- des moyens séparateurs propres à séparer le faisceau d'excitation cohérent en une première partie réfléchie et en une seconde partie transmise ;
- au moins un échantillon ;
- un premier étage déflecteur propre à balayer selon une première déflexion choisie la seconde partie transmise ou la première partie réfléchie du faisceau d'excitation cohérent sur l'échantillon ;
- des premiers moyens de couplage optique propres à recueillir le faisceau de diffusion incohérent de longueur d'onde différente de celle du faisceau d'excitation qui résulte du balayage du faisceau d'excitation cohérent sur l'échantillon, les moyens séparateurs étant propres à séparer ledit faisceau de diffusion incohérent ainsi recueilli en une première partie réfléchie et en une seconde partie transmise ;
- des seconds moyens formant diaphragme comprenant une seconde ouverture variable conjuguée de la première ouverture pour filtrer la première partie réfléchie ou la seconde partie transmise du faisceau de diffusion incohérent ;
- un spectromètre possédant une ouverture d'entrée selon un axe de sortie, ledit spectromètre étant équipé d'un module de détection multicanal à plusieurs éléments détecteurs et de moyens de traitement pour analyser les signaux perçus par ces éléments détecteurs ;
- des seconds moyens de couplage optique propres à conduire la première partie réfléchie ou la seconde partie transmise du faisceau de diffusion incohérent vers l'ouverture d'entrée du spectromètre ; et
- un second étage déflecteur placé en aval des seconds moyens formant diaphragme et propres à balayer selon une seconde déflexion choisie l'image spectrale de l'échantillon sur le module de détection multicanal.

Une telle structure permet de réaliser un appareil de spectrométrie à balayage confocal qui a l'avantage d'améliorer la résolution spatiale de l'appareil.

Selon un mode de réalisation de l'invention, le second étage déflecteur est disposé en amont de l'ouverture d'entrée du spectromètre.

Selon un autre mode de réalisation préféré de l'invention, dans lequel le spectromètre comprend au moins deux étages dispersifs, le second étage déflecteur est disposé entre lesdits étages dispersifs du spectromètre.

En pratique, la première déflexion est mono, bi ou tridimensionnelle.

De même, la seconde déflexion est mono, bi ou tridimensionnelle.

Selon une autre caractéristique de l'invention, les première et seconde déflexions peuvent être synchrones et leurs amplitudes peuvent être asservies l'une par rapport à l'autre de manière à réaliser un grandissement choisi de l'image de la zone balayée de l'échantillon sur le module de détection multicanal.

Selon un autre aspect de l'invention, le dispositif comprend en outre :
- des moyens de filtrage du faisceau d'excitation ayant une largeur de filtrage prédéterminée pour éliminer une bande spectrale de largeur spectrale prédéterminée centrée sur une fréquence choisie correspondant à la longueur d'onde du faisceau d'excitation ;
- des moyens de capture pour mesurer le flux lumineux dépourvu de ladite bande spectrale ainsi éliminée ; et
- des moyens de commande propres à agir sur le premier étage déflecteur pour rechercher le maximum de signal spectral dans le flux lumineux ainsi capté, ce qui permet d'asservir la mise au point sur le zone de l'échantillon à analyser qui est caractérisée par ledit signal spectral.

D'autres caractéristiques et avantages de l'invention apparaîtront à la lumière de la description détaillée ci-après et des dessins annexés dans lesquels :
- la figure 1 représente une vue schématique des premiers et seconds moyens de couplage optique permettant d'améliorer la résolution latérale et axiale de l'appareil selon l'invention ainsi que la comparaison des spectres de deux échantillons distincts éclairés respectivement par les parties réfléchie et transmise du faisceau d'excitation ;
- la figure 2 est une vue schématique des premiers moyens de couplage optique permettant d'éclairer en outre l'échantillon à analyser par les parties réfléchie et transmise du faisceau d'excitation cohérent selon l'invention ;
- la figure 3 est une vue schématique des moyens expanseurs de faisceau d'excitation selon l'invention ;
- la figure 4 est une vue schématique des moyens adaptateurs d'ouverture du faisceau de diffusion selon l'invention ;
- la figure 5 est une platine supportant les premiers et seconds moyens de couplage optique selon l'invention ;
- la figure 6 est une vue schématique des moyens formant manivelle optique selon l'invention ;
- la figure 7 est une vue schématique de l'appareil de spectrométrie à balayage confocal selon l'invention ;
- la figure 8 est un exemple de réalisation des premier et second étages déflecteurs selon l'invention ; et
- la figure 9 est une vue schématique du dispositif autofocus selon l'invention.

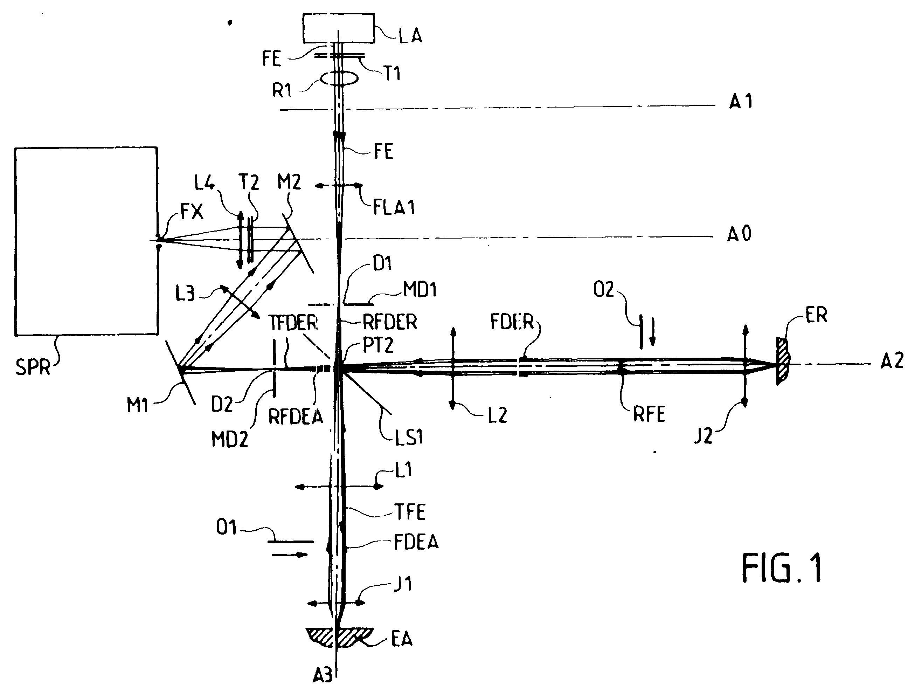

Sur la figure 1, on a représenté schématiquement un appareil conformément à l'invention permettant d'améliorer les résolutions axiale et latérale d'un appareil de spectrométrie.

Dans la suite de la description, il est fait référence à un spectromètre RAMAN.

Bien entendu, les moyens essentiels et constitutifs de l'invention qui sont décrits ici pour le RAMAN peuvent s'appliquer mutatis mutandis à d'autres spectromètres tels que des spectromètres IR, d'absorption, fluorescence, luminescence, etc.

Cet appareil comprend une source lumineuse LA engendrant un faisceau de lumière excitatrice monochromatique cohérente selon un axe d'entrée A3. Le faisceau d'excitation FE de lumière monochromatique a une longueur d'onde se situant dans le visible ou proche ultraviolet ou proche infrarouge. Comme source de lumière, on peut utiliser une source laser fonctionnant en continu ou bien en impulsions telle qu'un laser à Argon développant une puissance maximale 1 Watt par exemple et émettant un faisceau lumineux ayant une longueur d'onde de 488 nm et 514,5 nm.

Le faisceau d'excitation cohérent FE est d'abord filtré par des filtres T1 de type à absorption ou interférentiel puis polarisé par un organe polariseur R1 ou un rotateur de polarisation.

Le filtre T1 et le polariseur R1 sont disposés selon l'axe d'entrée A3.

Le faisceau d'excitation cohérent FE est ensuite focalisé par des moyens de focalisation FLA1 de type convergent sur une ouverture D1 réglable formant diaphragme MD1.

Les moyens de focalisation FLA1 sont par exemple des lentilles ou des miroirs cylindriques ou sphériques. En corollaire, l'ouverture D1 est choisie rectangulaire ou circulaire.

Le faisceau d'excitation cohérent sortant du diaphragme MD1 est ensuite conduit sur des moyens séparateurs LS1 propres à séparer ledit faisceau d'excitation en une première partie réfléchie RFE supérieure à 0 et inférieure à 1 et en une seconde partie transmise TFE avec sensiblement RFE + TFE = 1.

Un organe de couplage optique L1 tel qu'une lentille va conduire ensuite la seconde partie transmise TFE du faisceau d'excitation sur l'échantillon à analyser EA disposé selon l'axe d'entrée A3.

Par exemple, l'échantillon EA est placé sous l'objectif J1 d'un microscope.

L'organe de couplage optique L1 va également recueillir le faisceau de diffusion incohérent qui résulte de l'éclairement de l'échantillon à analyser EA par la seconde partie transmise TFE du faisceau d'excitation cohérent.

Les moyens séparateurs LS1 séparent alors le faisceau de diffusion incohérent FDEA en une première partie réfléchie RFDEA supérieure à 0 et inférieure à 1 et en une seconde partie transmise TFDEA avec sensiblement RFDEA + TFDEA = 1.

La première partie réléchie RFDEA du faisceau de diffusion incohérent FDEA est conduite ensuite vers une ouverture D2 réalable formant diaphragme MD2 conjuguée de la première ouverture D1. Ainsi, dans le cas d'une ouverture D1 choisie rectangulaire ou circulaire, l'ouverture D2 est choisie rectangulaire ou circulaire.

La première partie réfléchie RFDEA du faisceau de diffusion incohérent sortant du diaphragme MD2 est enfin acheminée par des organes de couplage optique M1, M2, T2 et L4 vers l'ouverture d'entrée Fx du spectromètre SPR agencé selon un axe de sortie A0.

Les deux miroirs M1 et M2 sont ici disposés pour conduire la première partie réfléchie RFDEA du faisceau de diffusion incohérent sortant du diaphragme MD2 de l'axe A2 paralléle à l'axe de sortie A0 vers ledit axe de sortie A0. Bien entendu, les miroirs M1 et M2 ne sont pas nécéssaires dans le cas où les moyens séparateurs LS1 agissent selon l'axe de sortie A0.

Le filtre T2 et la lentille de collimation L4 agencés selon l'axe de sortie A0 permettent de focaliser la première partie réfléchie RFDEA du faisceau de diffusion incohérent sortant du miroir M2 dans l'ouverture d'entrée FX du spectromètre SPR.

Selon l'invention, la focalisation du faisceau d'excitation cohérent FE dans l'ouverture D1 réglable du diaphragme MD1 permet de filtrer spatialement ledit faisceau d'excitation cohérent d'une part et la focalisation de l'image de l'échantillon en lumière diffusée incohérente sur un diaphragme MD2 dont l'ouverture D2 est réglable et conjuguée de l'ouverture D1, c'est-à-dire de l'échantillon à analyser, permet d'améliorer la résolution axiale et latérale de l'appareil d'autre part.

Il est à remarquer que les moyens formant diaphragme MD1 sont éloignés des moyens séparateurs LS1 d'une distance différente de celle séparant les seconds moyens formant diaphragme MD2 des moyens séparateurs LS1. Cette différence de distance est due au fait que le faisceau d'excitation filtré par le diaphragme MD1 est un faiceau de lumière cohérente tandis que le faisceau de diffusion filtré par le diaphragme MD2 est un faisceau de lumière incohérente.

De plus, il y a lieu de remarquer que le faisceau de diffusion incohérent est observé à une longueur d'onde différente de celle du faisceau d'excitation.

Selon l'invention, l'utilisation conjuguée des moyens formant diaphragme MD1 et MD2 et des moyens de focalisation du faisceau d'excitation FLA1 lorsque l'échantillon est placé sous l'objectif d'un microscope permet ainsi de façon surprenante de réaliser un microscope de spectrométrie RAMAN confocal.

L'avantage essentiel d'un tel microscope RAMAN confocal, en déplaçant l'échantillon horizontalement ou verticalement, est de permettre des analyses de type tomographique, c'est-à-dire selon plusieurs couches.

Il est à remarquer que la séparation du faisceau d'excitation et de diffusion en deux parties est symétrique, il en résulte que ce qui s'applique à la première partie réfléchie du faisceau peut s'appliquer mutatis mutandis à la seconde partie transmise du faisceau et réciproquement.

Ainsi, la configuration décrite en référence à la figure 1 n'est qu'un exemple pratique de réalisation. Bien entendu, l'utilisation conjuguée des moyens formant diaphragme MD1 et MD2 et des moyens de focalisation du faisceau d'excitation FLA1 s'applique aussi à la configuration dans laquelle la partie réfléchie du faisceau d'excitation éclaire le premier échantillon et dans laquelle la partie transmise du faisceau de diffusion résultant est acheminée vers l'ouverture d'entrée du spectromètre.

Selon un autre mode de réalisation de l'invention, il est prévu de disposer un second échantillon ER selon le second axe A2 parallèle à l'axe de sortie A0.

Il y a lieu de remarquer que l'axe d'entrée A3 et le second axe A2 se coupent en un point donné PT2 appartenant aux moyens séparateurs LS1, ici les deux axes A3 et A1 sont perpendiculaires en ce point PT2.

Le Demandeur s'est posé le problème d'utiliser de façon optimale les parties réfléchie RFE et transmise TFE du faisceau d'excitation cohérent FE séparé par les moyens séparateurs LS1.

Selon l'invention, il est prévu un organe de couplage L2 de type lentille de focalisation pour conduire la première partie réfléchie RFE du faisceau d'excitation sur le second échantillon ER selon l'axe de sortie A0.

Les moyens séparateurs LS1 séparent en outre le faisceau de diffusion FDER qui résulte de l'éclairement du second échantillon ER par la première partie réfléchie RFE du faisceau d'excitation en une première partie réfléchie RFDER et une seconde partie transmise TFDER. La seconde partie transmise TFDER est alors conduite vers l'ouverture FX du spectromètre SPR.

Le second échantillon ER est soit disposé sous l'objectif d'un microscope, on parle alors de microsonde RAMAN , soit il est placé sur un porte-échantillon classique, on parle alors de macrosonde RAMAN.

En intercalant des moyens formant obturateur 02 sur la première partie réfléchie du faisceau d'excitation RFE éclairant le second échantillon ER et des moyens formant obturateur 01 sur la seconde partie transmise TFE du faisceau d'excitation éclairant le premier échantillon EA, il est possible d'effectuer des comparaisons des deux spectres RAMAN sans déplacer les moyens de couplage optique.

Par exemple, il est possible de faire des mesures de soustraction, d'addition ou de rapport entre les deux spectres RAMAN résultants.

Il y a lieu de remarquer que ces mesures bénéficient avantageusement sur les deux échantillons de l'amélioration apportées à la résolution axiale et latérale selon l'invention.

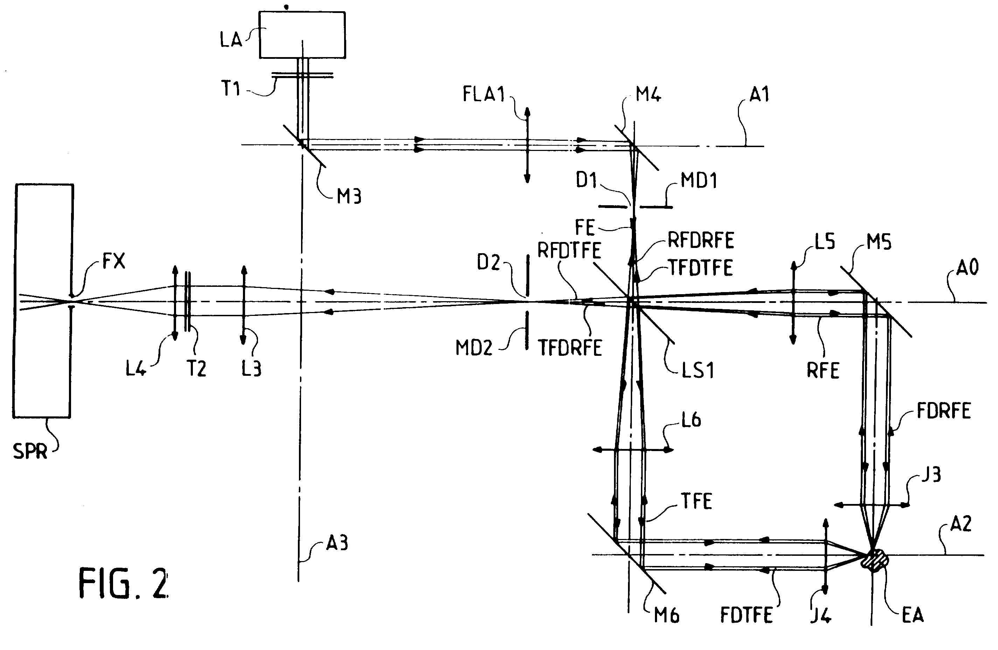

Il est maintenant fait référence à la figure 2.

Le Demandeur a constaté de façon surprenante que l'utilisation optimale du faisceau d'excitation séparé par les moyens séparateurs LS1 pour éclairer deux échantillons distincts peut être aussi appliquée avantageusement à un seul échantillon.

L'échantillon à analyser EA est ici disposé selon l'axe A2.

Des organes de couplage optiques comprenant deux miroirs M3 et M4 conduisent ici le faisceau d'excitation cohérent FE de l'axe d'entrée A3 vers l'axe de sortie A0 via le premier axe A1 parallèle à l'axe de sortie A0.

Les moyens séparateurs LS1 sont ici agencés selon l'axe de sortie A0.

La première partie réfléchie RFE du faisceau d'excitation cohérent FE est conduite sur l'échantillon à analyser EA par une lentille de focalisation L5 et un miroir M5.

Par exemple, l'échantillon à analyser EA est placé sous l'objectif J3 d'un microscope RAMAN.

De son côté, la seconde partie transmise TFE du faisceaud'excitation est acheminée sur l'échantillon à analyser EA à l'aide d'un miroir M6, d'une lentille L6 et d'un objectif J4.

Les moyens séparateurs LS1 séparent d'un côté le faisceau de diffusion incohérent FDRFE qui résulte de l'éclairement de l'échantillon EA par la première partie réfléchie RFE en une première partie réfléchie RFDRFE et une seconde partie transmise TFDRFE. Dans la configuration décrite en référence à la figure 2, c'est la seconde partie TFDRFE qui est ensuite acheminée vers l'ouverture d'entrée FX du spectromètre SPR.

Les moyens séparateurs LS1 séparent de l'autre côté le faisceau de diffusion FDTFE résultant de l'éclairement du même échantillon EA par la seconde partie transmise TFE du faisceau d'excitation en une première partie réfléchie RFDTFE et une seconde partie transmise TFDTFE. Dans la configuration décrite en référence à la figure 2, c'est la première partie réfléchie RFDTFE qui est ensuite acheminée vers l'ouverture d'entrée FX du spectromètre SPR.

L'homme de l'art comprendra qu'une telle configuration permet d'éclairer à la fois l'échantillon à analyser selon deux orientations et de collecter les deux faisceaux de diffusion résultant de ce double éclairement.

Il en résulte un gain du flux lumineux qui va être conduit dans l'ouverture d'entrée du spectromètre. Ce gain est sensiblement double par rapport à l'éclairement simple classique.

Cette configuration procure aussi un avantage lorsqu'il s'agit d'analyser des échantillons dont le positionnement n'est pas critique, par exemple en phase d'industrialisation.

Il est à noter que le double éclairement de l'échantillon et la double collection des faisceaux de diffusion qui en résulte bénéficient avantageusement de l'amélioration apportées à la résolution axiale et latérale selon l'invention telle que décrite en référence à la figure 1.

Il est aussi à noter qu'il est possible d'interposer des moyens formant obturateur sur le trajet des première et seconde parties du faisceau d'excitation pour effectuer des mesures comparées du spectre RAMAN.

Il y a lieu de remarquer qu'en ôtant la lame séparatrice LS1, le faisceau d'excitation cohérent FE est réfléchi par le miroir M6 puis éclaire l'échantillon à analyser EA, le faisceau de diffusion incohérent qui en résulte est ensuite réfléchi par le miroir M5 pour être conduit vers l'ouverture d'entrée FX du spectromètre SPR.

On remarque que l'on se retrouve ici dans un cas limite où le faisceau d'excitation réfléchi est nul tandis que le faisceau d'excitation transmis est maximal.

D'un autre côté, en remplaçant la lame séparatrice par un miroir, on se retrouve dans l'effet contraire, c'est-à-dire dans lequel le faisceau d'excitation réfléchi est maximal tandis que le faisceau d'excitation transmis est nul.

Avantageusement, les moyens séparateurs LS1 peuvent être constitués d'une lame séparatrice semi-transparente de type dichroïque, c'est-à-dire une lame dont le pouvoir séparateur est fonction de la longueur d'onde du faisceau incident.

L'utilisation d'une lame séparatrice dichroïque a l'avantage par rapport au montage classique d'acquérir les raies Stokes, anti-Stokes et le spectre basse fréquence du signal RAMAN.

En effet, classiquement, la courbe de réponse de la lame séparatrice dichroïque est généralement choisie de telle sorte que la partie transmise du faisceau d'excitation cohérent est très élevée par rapport à la partie réfléchie dudit faisceau d'excitation ou inversement. Il en résulte que le faisceau reçu par l'ouverture du spectromètre qui définit le signal RAMAN contient seulement la raie Stokes ou la raie anti-Stokes et ne contient pas la zone intermédiaire appelée par l'homme de l'art signal basse fréquence.

Par contre, grâce à l'invention, du fait du double éclairement de l'échantillon et de la double collection des faisceaux de diffusion qui en résulte, il est possible d'acquérir les raies Stokes, anti-Stokes et le spectre basse fréquence du signal RAMAN.

Il est à noter aussi ici que le double éclairement de l'échantillon et la double collection des faisceaux de diffusion qui en résulte bénéficient avantageusement de l'amélioration apportées à la résolution axiale et latérale selon l'invention telle que décrite en référence à la figure 1.

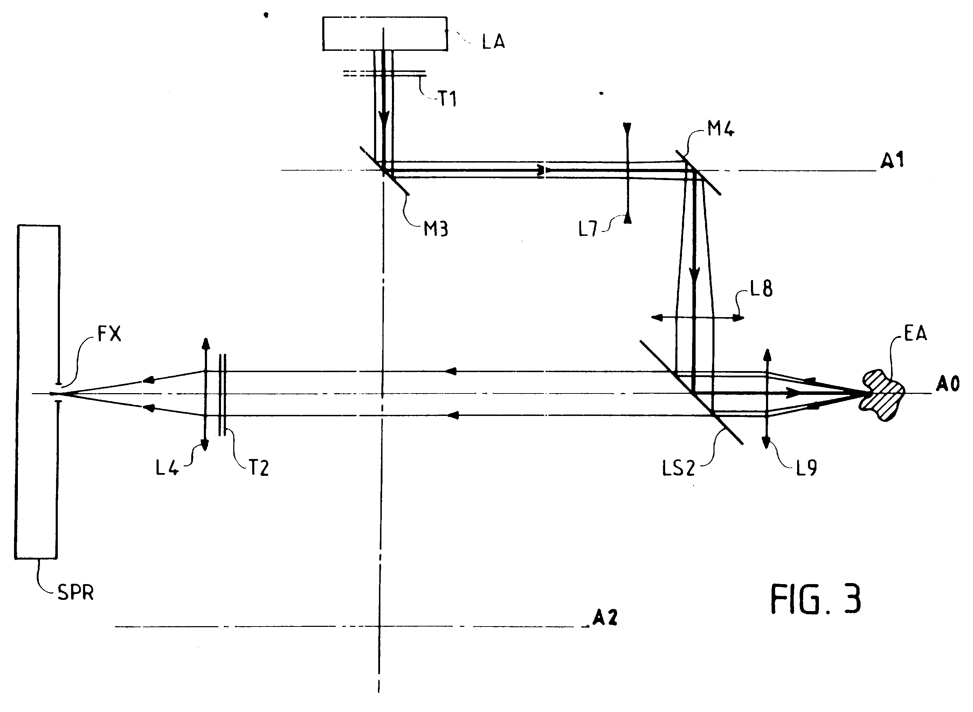

Il est maintenant fait référence à la figure 3.

Il s'agit ici de moyens formant expanseur du faisceau d'excitation FE qui sont montés en amont des moyens séparateurs LS2.

En pratique, les moyens expanseurs forment une lunette dite de Galilée constituée d'une lentille divergente L7 et d'une lentille convergente L8.

Les deux lentilles L7 et L8 sont disposées ici autour d'un miroir M4 conduisant le faisceau d'excitation FE vers les moyens séparateurs LS2.

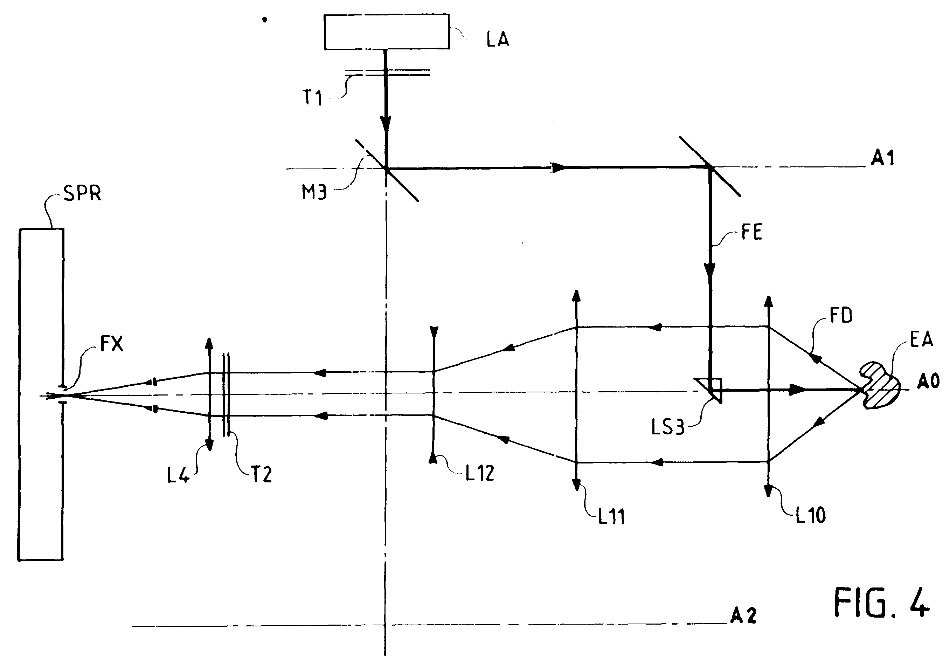

Il est maintenant fait référence à la figure 4.

Il s'agit ici de moyens formant adaptateur d'ouverture du faisceau de diffusion FD qui sont montés en aval des moyens séparateurs LS3 . Par exemple les moyens séparateurs sont de type prisme séparateur.

En pratique, les moyens adaptateurs forme une lunette dite de Galilée constituée d'une lentille de focalisation L10, d'une lentille convergente L11, et d'une lentille divergente L12.

Il est à noter aussi ici que l'expansion du faisceau d'excitation et l'adaptation d'ouverture du faisceau de diffusion bénéficient avantageusement de l'amélioration apportées à la résolution axiale et latérale selon l'invention telle que décrite en référence à la figure 1.

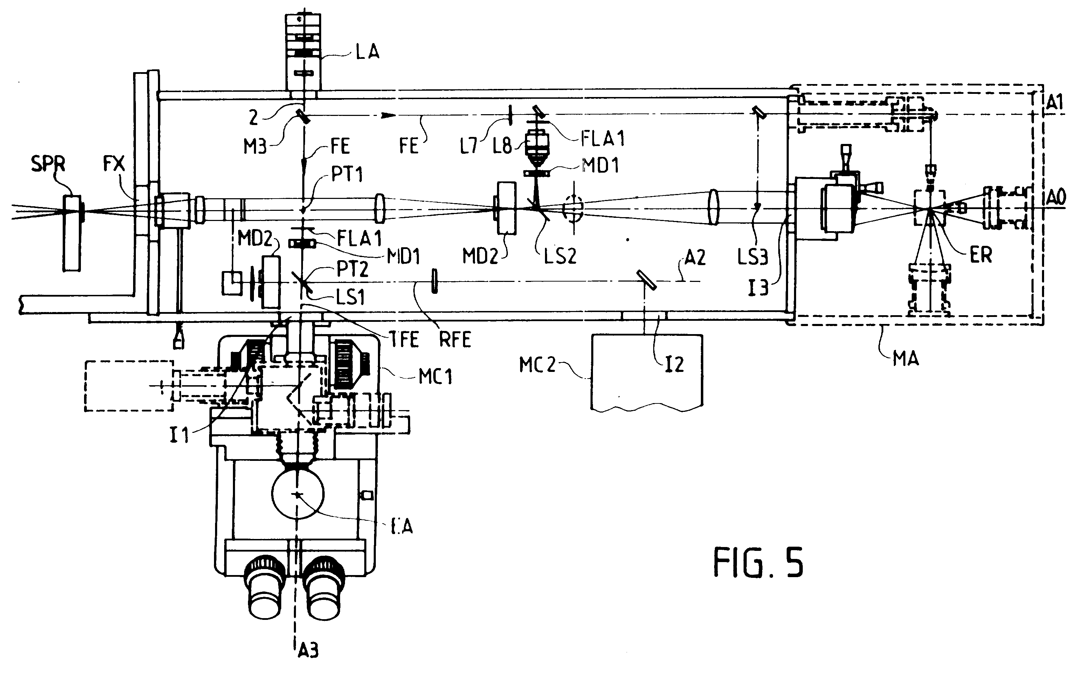

Il est maintenant fait référence à la figure 5.

Il s'agit ici d'une platine selon l'invention, destinée à recevoir les moyens de couplage optiques permettant d'améliorer le fonctionnement d'un appareil de spectrométrie RAMAN selon l'invention.

On retrouve les éléments essentiels et constitutifs d'un appareil de spectrométrie RAMAN, à savoir une source laser LA pour produire une lumière d'excitation cohérente selon l'axe d'entrée A3 ; au moins un échantillon à analyser, (sur la figure 3, il est représenté un premier échantillon EA à analyser disposé sous l'objectif d'un microscope MC1 d'une part et un second échantillon ER disposé sur un porte-échantillon formant macrosonde MA d'autre part ).

Selon l'invention, les moyens permettant d'améliorer les résolutions axiale et latérale de l'appareil sont astucieusement disposés autour des moyens séparateurs LS1 disposés à l'intersection de l'axe d'entrée A3 et du second axe A2 au point PT2.

Le Demandeur s'est posé aussi le problème de rendre modulaires les différents éléments de couplage optiques pour permettre une commutation facile et reproductible desdits éléments.

Pour cela, il y a lieu d'éviter que le faisceau d'excitation et le faisceau de diffusion qui en résulte passent simultanément par le point PT1 formant intersection entre l'axe d'entrée A3 et l'axe de sortie A0.

A partir de cette constatation, le Demandeur a disposé les éléments optiques de couplage de façon astucieuse.

Par exemple, le miroir M3 commutable permet de faire agir le faisceau d'excitation selon le premier axe A1 parallèle à l'axe de sortie A0.

Il est prévu une première entrée J1 pour un premier microscope MC1, une seconde entrée I2 pour un second microscope MC2, le cas échéant, et une troisième entrée I3 pour une macrosonde MA.

L'échantillon EA peut être ainsi analysé par la seconde partie TFE du second faisceau d'excitation FE transmise par les moyens séparateurs LS1 tandis que la première partie réfléchie RFE du faisceau d'excitation FE peut éclairer un autre échantillon via l'entrée I2 comme décrit en référence à la figure 1, ou le même échantillon comme décrit en référence à la figure 2.

Selon un autre aspect de l'invention, il est prévu d'interposer en amont des moyens séparateurs LS2, des moyens formant expanseur du faisceau d'excitation FE comme décrit en référence à la figure 3.

Selon un autre mode de réalisation de l'invention, il est prévu d'interposer sur l'axe de sortie A0, un prisme séparateur LS3 propre à séparer le faisceau d'excitation en une première partie d'excitation réfléchie propre à éclairer l'échantillon ER et d'interposer toujours sur l'axe de sortie A0 des moyens formant adaptateur d'ouverture du faisceau de diffusion, comme décrit en référence à la figure4 .

Il y a lieu de remarquer que les moyens formant diaphragme MD1 et MD2 permettant l'amélioration des résolutions axiale et latérale de l'appareil peuvent être disposés autour des moyens séparateurs LS2 et LS3 conformément à l'invention.

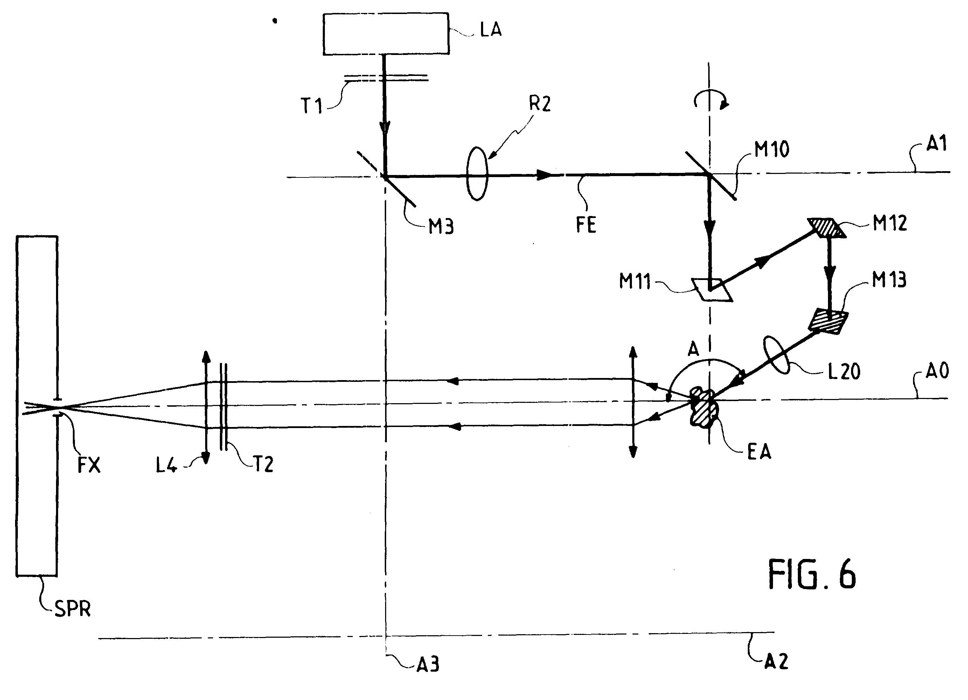

Il est maintenant fait référence à la figure 6 qui représente une manivelle optique.

Cette manivelle optique s'adapte avantageusement sur la platine telle que décrite en référence à la figure 5 au niveau de la seconde entrée I2.

Plus précisément, la manivelle optique comprend un jeu de miroirs M11, M12 et M13 tournant par rapport à un axe parallèle à l'axe d'entrée A3.

Par exemple, le faisceau d'excitation cohérent est d'abord réfléchi par un miroir M3 disposé selon le premier axe A1. Des moyens polarisateurs R2 polarisent le faisceau d'excitation FE. Le faisceau d'excitation ainsi polarisé est ensuite conduit via un miroir M10 sur le miroir tournant M11 qui réfléchit ensuite selon un angle variable le faisceau d'excitation FE sur un mécanisme à miroirs M12 et M13 solidaire du miroir M11. Une lentille de focalisation L20 est interposée entre le miroir tournant M11 et l'échantillon à analyser EA.

L'homme de l'art comprendra qu'avec une telle manivelle optique, il sera possible d'analyser l'échantillon sous plusieurs orientations.

Pour la facilité de la compréhension de l'exposé de l'invention, les dispositions des différents éléments optiques les uns par rapport aux autres décrites en référence aux figures 1à 6 sont choisies selon des angles droits. Bien entendu, l'invention s'applique à d'autres dispositions des différents éléments optiques selon des angles différents.

Dans un autre mode de réalisation de l'invention, auquel les variantes ci-dessus sont applicables, on a cherché à bénéficier des avantages conférés par des dispositifs de balayage tout en conservant les avantages conférés par le dispositif confocal décrit ci-avant.

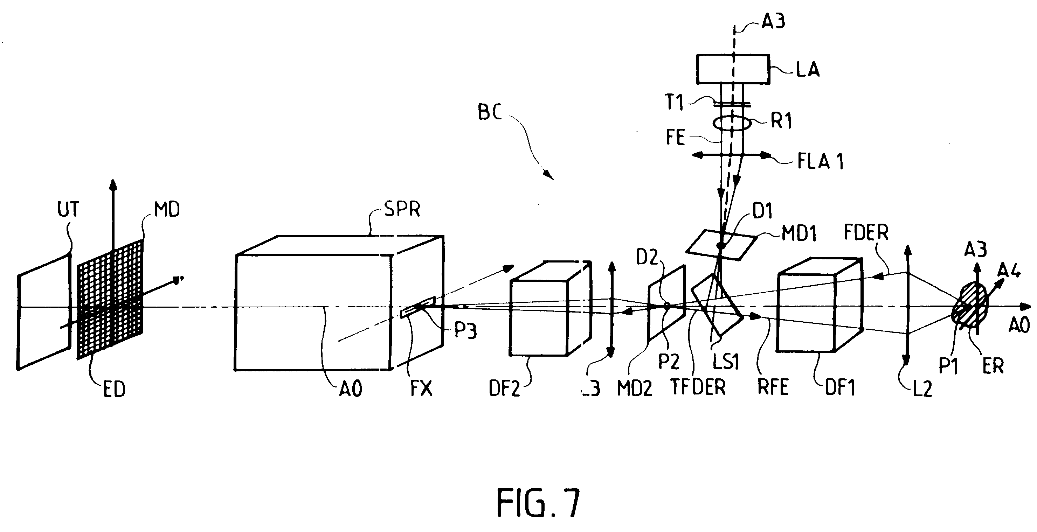

Le schéma de principe de la figure 7 donne les caractéristiques générales un appareil de spectrométrie RAMAN à balayage confocal.

Comparativement à la figure 1, on observe que l'appareil de spectrométrie RAMAN à balayage confocal, désigné sous la référence BC, comprend en outre deux étages déflecteurs DF1 et DF2.

Selon l'invention, le premier étage déflecteur DF1 est disposé en aval de moyens séparateurs LS pour permettre le balayage selon une première déflexion choisie X1 de la première partie réfléchie RFE du faisceau d'excitation cohérent sur l'échantillon ER.

Très avantageusement, la zone de l'échantillon P1 éclairée par la première partie réfléchie RFE du faisceau d'excitation cohérent FE et l'image optique P2 de cette zone P1 dans l'ouverture D2 du diaphragme MD2 sont maintenues conjuguées optiquement.

La déflexion X1 peut être monodimensionnelle par rapport à l'axe A3, bidimensionnelle par rapport aux axes A3 et A0 et tridimensionnelle par rapport aux axes A3, A0 et A4 qui est un axe perpendiculaire à A3 et A0.

Une déflexion X1 monodimensionnelle correspond à une exploration le long d'une ligne choisie de l'échantillon.

Une déflexion bidimensionnelle selon les axes A3 et A4 correspond à une exploration le long d'une courbe choisie ou d'une surface choisie de l'échantillon.

Une déflexion tridimensionnelle correspond à une exploration successive de plusieurs sections optiques, c'est-à-dire à une exploration en profondeur. Une telle exploration a de nombreux avantages comme on le verra plus loin, notamment en analyse de type cartographie ou tomographie.

L'installation représenté sur la figure 7 est complétée par un module de détection multicanal MD comprenant une pluralité d'éléments détecteurs ED, recevant l'image spectrale émise par le spectromètre dispersif SFR.

Enfin des moyens de traitement UT sont couplés au module de détection multicanal pour analyser les signaux perçus par ces éléments détecteurs EL.

Par exemple, le module de détection MD est du type matriciel et les éléments détecteurs sont du type CCD, c'est-à-dire à transfert de charge.

Selon l'invention, le second étage déflecteur DF2 est placé en aval des seconds moyens formant diaphragme MD2 pour balayer, selon une seconde déflexion X2 choisie, l'image spectrale du faisceau de diffusion incohérent ainsi filtrée par les seconds moyens formant diaphragme MD2 sur le module de détection multicanal MD.

Dans l'exemple représenté sur la figure 7, le second étage déflecteur est placé en amont de la fente d'entrée FX du spectromètre dispersif SFR. Il est à remarquer que le spectromètre dispersif est dit stigmatique, c'est-à-dire qu'il donne pour chaque point de la fente FX une image spectrale couvrant une ligne de pixels du détecteurs matriciel MD.

Sur la figure 7, il est représenté une fente d'entrée FX rectiligne.

Dans ce cas, la déflexion X2 est choisie monodimensionnelle (déplacement transversal) de sorte que l'image optique P3 de l'image P2 se déplace transversalement sur la fente d'entrée FX rectiligne.

En variante, on peut envisager le cas de fentes FX courbes, de systèmes à plusieurs fentes ou de spectromètre de type HADAMARD ou similaire, ce qui peut entraîner le choix d'une déflexion X2 bidimensionnelle.

Il est à remarquer que les déflexions X1 et X2 sont réalisées de manière à conserver une configuration confocale dans laquelle l'image de P2 de la zone analysée P1 de l'échantillon est formée sur un diaphragme ajustable D2 ce qui assure un filtrage spatial et procure les avantages relatifs à l'élimination de la lumière parasite et l'amélioration de la résolution latérale et axiale mentionnée plus haut.

Comme on le verra plus en détail ci-après, le second étage déflecteur DF2 peut être placé, en variante, entre les deux étages dispersifs du spectromètre SFR, ou encore à la sortie des monochromateurs du spectromètre dispersif.

Dans un autre mode de réalisation de l'invention, auquel les variantes ci-dessus sont applicables, on a cherché à réaliser une platine à balayage confocal.

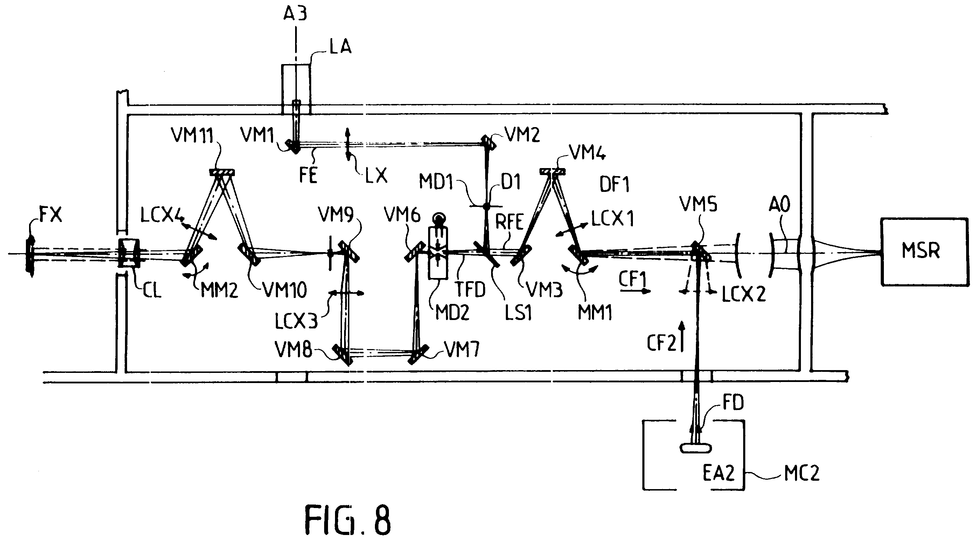

Le schéma de principe de la figure 8 donne les caractéristiques générale de cette platine à balayage confocal.

Comparativement à la figure 5, on observe que maintenant l'appareil comprend non seulement les moyens formant diaphragme MD1 et MD2, mais aussi les étages déflecteurs DF1 et DF2.

On retrouve aussi les éléments essentiels et constitutifs de l'appareil de spectrométrie RAMAN, à savoir une source laser LA pour produire une lumière d'excitation cohérente selon l'axe d'entrée A3, au moins un échantillon à analyser EA2 disposé sous l'objectif d'un microscope MC2 ou sous l'objectif d'un appareil optique de plus longue focale telle qu'une macro-sonde RAMAN MSR.

Des organes de couplage optiques comprenant deux miroirs VM1 et VM2 conduisent ici le faisceau d'excitation cohérent FE de l'axe d'entrée A3 vers l'axe de sortie A0.

Les moyens séparateurs LS2 sont ici agencés selon l'axe de sortie A0.

Une lentille LX est interposée entre les miroirs VM1 et VM2 pour focaliser le faisceau FE sur le diaphragme MD1.

Le diaphragme ajustable MD1 est intercalé entre le miroir VM2 et les moyens séparateurs LS2 pour filtrer spatialement le faisceau d'excitation cohérent FE.

Selon l'invention, l'étage déflecteur DF1 disposé en aval des moyens séparateurs LS2 comprend un miroir mobile à rotation MM1.

Le miroir mobile à rotation MM1 balaye dans le sens aller du trajet lumineux (flèche CF1 figure 0) la partie réfléchie du faisceau d'excitation cohérent RFE sur l'échantillon à analyser (placé sous microscope MC2 ou sous macro-sonde MSR).

Grâce à l'invention, la partie réfléchie du faisceau d'excitation cohérent éclaire selon une déflexion X1 choisie et variable l'échantillon, ce qui permet d'éclairer n'importe quelle zone dudit échantillon.

Des miroirs fixes VM3, VM4 et VM5 complètent l'environnement de l'étage déflecteur DF1.

Par ailleurs, des lentilles de focalisation LCX1, ou de champ LCX2 peuvent être disposées sur le chemin optique du faisceau d'excitation RFE.

Dans le sens retour du trajet lumineux (flèche CF2 figure 8) le faisceau de diffusion FD résultant de l'éclairement de l'échantillon à analyser par la partie réfléchie du faisceau d'excitation RFE est recueilli par les moyens séparateurs LS2 après déflection par l'étage déflecteur DF1.

Il y a lieu de remarquer ici que l'étage déflecteur DF1 assure une déflection simultanée du faisceau excitateur et du faisceau de diffusion qui comprend les informations d'analyse. Ces deux faisceaux qui sont de nature et de sens de propagation différents suivent ici les mêmes trajets lumineux.

De leur côté, les moyens séparateurs LS2 séparent le faisceau de diffusion F2 en une partie réfléchie et en une partie transmise.

Ici, c'est la partie transmise TFD qui est acheminée vers un diaphragme MD2 présentant une ouverture D2 réglable.

Selon l'invention, un étage déflecteur DF2 est placé en aval du diaphragme D2.

Par exemple l'étage déflecteur DF2 comprend un miroir mobile à rotation MM2 pour balayer l'image spectrale de l'échantillon sur la fente d'entrée FX du spectromètre dispersif SPR.

Le miroir mobile à rotation MM2 permet de balayer l'image spectrale issue du diaphragme MD2 sur la fente FX selon une déflexion X2 choisie et variable.

L'environnement de l'étage déflecteur DF2 est complété par une pluralité de miroirs VM6, VM7, VMO, VM9, VM10, M11 fixes permettant d'acheminer le fasceau lumineux du diaphragme MD2 sur le miroir mobile à rotation MM2.

Des lentilles de focalisation LCX3 et LCX4 complètent également l'architecture.

En sortie du miroir MM2, il est prévu en outre des moyens de correction de l'astigmatisme CL.

L'homme de l'art comprendra que la platine confocale à balayage décrite en référence à la figure 8 a l'avantage de pouvoir être utilisée indifféremment en spectrométrie RAMAN, en spectrométrie à fluorescence, en spectrométrie à luminescence, etc.

En effet, les éléments essentiels et constitutifs de la platine confocale à balayage ne sont pas influencés ici par la technique de spectrométrie utilisée puisqu'ils peuvent être utilisés dans n'importe qu'elle technique de spectrométrie.

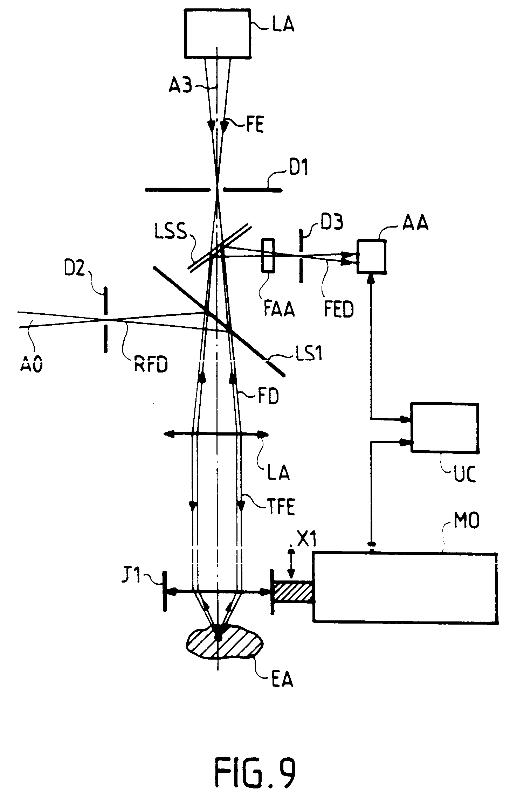

En référence à la figure 9, on retrouve les moyens essentiels et constitutifs de l'appareil de spectrométrie RAMAN à balayage confocal, à savoir une source laser LA pour produire une lumière d'excitation cohérente selon l'axe d'entrée A3 et un échantillon à analyser disposé sous l'objectif J1 d'un microscope MC1.

Il y a lieu de remarquer que sur la figure 9, l'échantillon EA est disposé par exemple selon l'axe A3 décrit en référence à la figure 6.

Dans ces conditions, la partie transmise TFE du faisceau d'excitation cohérent FE éclaire l'échantillon à analyser EA.

Il est à rappeler ici que c'est l'organe séparateur LS1 qui sépare le faisceau d'excitation FE en une partie réfléchie RFE (non représentée) et en une partie transmise TFE qui va éclairer l'échantillon à analyser EA.

Le faisceau de diffusion incohérent FD qui résulte de l'éclairement de l'échantillon est ensuite recueilli par une lentille LA pour être acheminé sur l'organe séparateur LS1, qui de son côté va séparer le faisceau de diffusion FD en une partie transmise TFD (non représentée) et en une partie réfléchie RFD. La partie réfléchie RFD est ensuite filtrée par le diaphragme MD2 placé sur l'axe de sortie A0.

C'est le déplacement de l'objectif J1 en profondeur ou d'un autre élément optique intermédiaire qui va ici constituer une déflexion X1, l'objectif J1 constituant alors le premier étage déflecteur DF1.

Le déplacement de l'objectif J1 en profondeur (ici sur la figure 8 selon l'axe M3) est commandé par un moteur MO ou par un déplacement piézoélectrique dont le fonctionnement est commandé par un organe de commande UC.

Selon l'invention, il est prévu un filtre FAA du faisceau d'excitation FE disposé par exemple selon un axe parallèle à A0 et propre à éliminer une bande spectrale de largeur spectrale prédéterminée centrée sur la fréquence correspondant à la longueur d'onde de rayonnement électromagnétique de la source laser LA.

Le faisceau d'excitation FE est par exemple acheminé sur le filtre FAA par l'intermédiaire d'une lame séparatrice LSS disposée avantageusement en aval des moyens formant diaphragme D1.

Le filtre FAA permet donc de filtrer le faisceau d'excitation FE et d'extraire de ce faiscau d'excitation la raie d'excitation principale.

Le flux lumineux FED dépourvu de cette raie d'excitation est ensuite acheminé vers un moyen de capture AA à travers un diaphragme D3.

Par exemple, le filtre FAA est du type de celui décrit dans la Demande de Brevet français No 91 12061 déposée par le Demandeur le 1er octobre 1991.

Enfin, les moyens de capture AA sont reliés à l'unité de commande UC qui va agir sur le déplacement de l'objectif J1 pour rechercher le maximum de signal spectral dans le flux lumineux ainsi capté.

Il s'agit d'un avantage important, car l'asservissement du déplacement de l'objectif J1 en recherchant le maximum de signal spectral permet d'asservir la mise au point sur la zone de l'échantillon à analyser caractérisée par ledit signal spectral.

D'une manière générale, l'asservissement du déplacement de l'objectif J1 en recherchant le maximum de signal spectral peut s'effectuer soit à la fréquence de la radiation excitatrice, c'est-à-dire du laser, soit à des fréquences différentes de l'excitatrice correspondant chacune à une raie ou une bande du spectre RAMAN caractéristique d'une espèce chimique choisie, soit encore pour l'ensemble du spectre RAMAN grâce à un filtre éliminant la radiation laser excitatrice (ici avec le filtre FAA).

Comme représenté sur la figure 9, la déflexion X1 en profondeur permet une discrimation appelée "optical sectionning" par l'homme de l'art en contrôlant rigoureusement la profondeur de la "tranche" analysée par rapport à la surface ou tout autre élément de référence.

Cette déflexion X1 en profondeur peut être réalisée par un déplacement de l'échantillon, de l'objectif, ou d'un élément optique intermédiaire.

L'homme de l'art comprendra qu'il est possible de réaliser plusieurs utilisation des déflexions X1 et X2.

Dans un premier exemple de réalisation, la première déflexion X1 est variable tandis que la déflexion X2 est fixe. Cette configuration correspond à un balayage d'une ligne (droite ou de forme quelconque) en continu ou pas à pas sur une surface de l'échantillon. Le point P1 observé reste conjugué à la fois de la source d'excitation LA et du diaphragme MD2.

Le spectre dispersé dans le spectromètre occupe alors une position fixe sur le module de détection multicanal (une rangée de pixels).

Une telle configuration confère l'avantage d'éviter la dégradation de l'échantillon par le rayonnement laser et permet également d'effectuer une intégration des variations d'intensité spectrale pour un échantillon hétérogène.

Dans un autre exemple de réalisation, plus avantageux les déflexions X1 et X2 sont rendues synchrones et variables.

Il est à noter que le synchronisme entre les déflexions X1 et X2 est indispensable pour conserver un stigmatisme entre l'échantillon et le module de détection.

Ainsi, avec des déflexions synchrones l'une par rapport à l'autre, les spectres successifs des différentes zones de l'échantillon explorées sous la déflexion X1 occupent des positions différentes sur les pixels du module de détection multicanal, ces différentes positions étant variables selon la déflexion X2.

Une telle configuration améliore la dynamique de détection grâce à des temps d'intégration différents pour des spectres successifs. Elle peut également permettre la reconstruction d'images monochromatiques par traitement numérique des signaux.

Le traitement du signal après lecture des éléments détecteurs permet avantageusement de faire la somme de plusieurs lignes (binning) ou toute opération mathématique choisie.

Le choix de la déflexion X2 couplée à celle X1 permet de positionner les spectres RAMAN des diverses sections optiques sur des lignes différentes du détecteur multicanal.

On obtient alors une cartographie de l'échantillon à analyser.

A l'intérieur de chaque section optique, le choix de la déflexion X1 permet soit l'exploration d'une ligne, soit l'exploration d'une surface choisie dans l'échantillon.

Il est clair que cette analyse peut être aussi couplée avec la recherche du maximum d'intensité mentionné ci-avant ou d'une valeur déduite d'une intensité de référence.

De façon surprenante, le Demandeur a constaté aussi que le changement de l'amplitude des déflexions X1 et X2 permet de réaliser une variation de grandissement de l'échantillon sur le détecteur multicanal.

En d'autres termes, l'asservissement des amplitudes des déflexions X1 et X2 permet d'adapter en fonction de l'application le grandissement de l'échantillon sur le module de détection, c'est-à-dire de changer le nombre de pixels excités par micromètre d'échantillon, et cela indépendamment de la résolution spatiale intrinsèque donnée par le dispositif de focalisation sur l'échantillon.

En résumé, l'appareil selon l'invention apporte aux modules de détection des éléments d'analyse de meilleure qualité que dans l'art antérieur, ce qui, en liaison avec des moyens de traitement appropriés, permet d'améliorer l'analyse spectrométrique des composants chimiques.

## Revendications

1. Appareil de spectrométrie comprenant :
- des moyens (LA) pour produire une lumière d'excitation cohérente selon un axe d'entrée (A3),
- au moins un premier échantillon (EA),
- un spectromètre (SPR) possédant une ouverture d'entrée (FX) selon un axe de sortie (A0),
- des moyens séparateurs (LS1,LS2,LS3) propres à recevoir et séparer le faisceau d'excitation cohérent (FE) en une partie réfléchie (RFE) et en une partie transmise (TFE), et
- des premiers moyens de couplage optique propres à conduire la partie transmise (TFE) ou la partie réfléchie (RFE) du faisceau d'excitation cohérent sur le premier échantillon (EA), ainsi qu'à recueillir le faisceau de diffusion incohérent qui en résulte, les moyens séparateurs étant propres à recevoir et séparer ledit faisceau de diffusion incohérent (FD) en une partie réfléchie (RFDEA) et une partie transmise (TFDEA), et
- des seconds moyens de couplage optique propres à conduire la partie réfléchie (RFDEA) ou la partie transmise (TFDEA) du faisceau de diffusion incohérent (FD) vers l'ouverture d'entrée (FX) du spectromètre,
caractérisé en ce que les premiers moyens de couplage optique comprennent:
- des premiers moyens de focalisation (FLA1) propres à focaliser le faisceau d'excitation cohérent (FE) sur une première ouverture de dimensions variables (D1), formant diaphragme,
- des seconds moyens dé focalisation (L1) propres à focaliser le faisceau de diffusion incohérent sur une seconde ouverture de dimensions variables (D2), formant diaphragme, les premières et seconde ouvertures (D1 et D2) étant conjuguées optiquement l'une par rapport à l'autre et
les dimensions des première et seconde ouvertures (D1 et D2) étant choisies en vue d'optimiser la résolution spatiale de l'appareil de spectrométrie.

2. Appareil selon la revendication 1, caractérisé en ce que le premier échantillon (EA) est placé sous l'objectif (J1) d'un microscope.

3. Appareil selon la revendication 1 ou la revendication 2, caractérisé en ce que les premiers moyens de couplage optique (L5,M5) conduisent en outre la première partie réfléchie (RFE) ou la seconde partie transmise (TFE) du faisceau d'excitation cohérent sur ledit premier échantillon (EA), les moyens séparateurs (LS1) étant propres en outre à séparer le faisceau de diffusion incohérent qui résulte de l'éclairement dudit premier échantillon (EA) par la première partie réfléchie (RFE) ou la seconde partie transmise (TFE) du faisceau d'excitation en une première partie réfléchie (RFDEA) et une seconde partie transmise (TFDEA) et à conduire la seconde partie transmise (TFDRFE) ou la première partie réfléchie (RFDTFE) dudit faisceau de diffusion incohérent sur l'ouverture d'entrée (FX) du spectromètre (SPR).

4. Appareil selon la revendication 1 ou la revendication 2, caractérisé en ce qu'il comprend en outre un second échantillon (ER), et en ce que les premiers moyens de couplage optique (L2,J2) conduisent en outre la première partie réfléchie (RFE) ou la seconde partie transmise (TFE) du faisceau d'excitation cohérent sur le second échantillon (ER), les moyens séparateurs (LS1) étant propres en outre à séparer le faisceau de diffusion (FDER) incohérent qui résulte de l'éclairement du second échantillon (ER) par la première partie réfléchie (RFE) ou la seconde partie transmise (TFE) du faisceau d'excitation en une première partie réfléchie (RFDER) et une seconde partie transmise (TFDER) et à conduire la seconde partie transmise (TFDER) ou la première partie réfléchie (RFDER) dudit faisceau de diffusion incohérent sur l'ouverture d'entrée (FX) du spectromètre (SPR).

5. Appareil selon la revendication 3 ou la revendication 4, caractérisé en ce que les premiers moyens de couplage comprennent en outre :
- des premiers moyens formant obturateur (01) pour la première partie réfléchie (RFE) du faisceau d'excitation cohérent ; et
- des seconds moyens formant obturateur (02) pour la seconde partie transmise (TFE) du faisceau d'excitation cohérent.

6. Appareil selon l'une quelconque des revendications précédentes, caractérisé en ce qu'il comprend un porte-échantillon monté en translations horizontale et verticale et des moyens de commande propres à piloter les translations horizontale ou verticale du porte-échantillon.

7. Appareil selon l'une quelconque des précédentes revendications, caractérisé en ce que les moyens séparateurs (LS1) comprennent une lame séparatrice de type dichroïque, c'est-à-dire dont le pouvoir séparateur est fonction de la longueur d'onde du faisceau incident, ce qui permet d'acquérir les raies Stokes, les raies anti-Stokes et le signal basse fréquence du signal RAMAN.

8. Appareil selon l'une quelconque des revendications précédentes, caractérisé en ce que les premiers moyens de couplage optique comprennent en outre des moyens formant manivelle optique comprenant une lentille de focalisation (L20) et un mécanisme à miroirs (M11, M12,M13) mobile en rotation autour d'un axe parallèle à l'axe d'entrée (A3), ce qui permet d'éclairer les premier (EA) ou second (ER) échantillons selon un angle variable (A).

9. Appareil selon l'une quelconque des revendications précédentes, caractérisé en ce que les premiers moyens de couplage optique comprennent en outre des moyens formant expanseur (L7,L8) du faisceau d'excitation cohérent.

10. Appareil selon l'une quelconque des revendications précédentes, caractérisé en ce que les seconds moyens de couplage optique comprennent en outre des moyens formant adaptateur d'ouverture (L10,L11,L12) du faisceau de diffusion incohérent.

11. Appareil selon l'une quelconques des précédentes revendications, caractérisé en ce que les moyens de focalisation (FLA1) sont formés de lentilles ou de miroirs cylindriques ou sphériques tandis que les ouvertures (D1 et D2) des moyens formant diaphragme (MD1 et MD2) sont choisies rectangulaires ou circulaires.

12. Appareil selon l'une quelconque des revendications précédentes, caractérisé en ce que les premiers et seconds moyens de couplage optique sont disposés sur une platine et agencés sous la forme d'une pluralité de modules facilement commutable et reproductible sur le faisceau d'excitation et de diffusion.

13. Appareil selon la revendication 12, caractérisé en ce qu'il comprend au moins une première entrée (I1) pour un microscope de spectrométrie RAMAN et une entrée (I3) pour une macro-sonde RAMAN.

14. Appareil de spectrométrie selon la revendication 1, caractérisé en ce qu'il comprend en combinaison :
- des moyens (LA) pour produire une lumière d'excitation cohérente selon un axe de sortie (A3) ;
- des premiers moyens formant diaphragme (MD1) comprenant une première ouverture variable choisie (D1) pour filtrer spatialement le faisceau d'excitation cohérent (FE) ;
- des moyens séparateurs (LS1,LS2) propres à séparer le faisceau d'excitation cohérent (FE) en une première partie réfléchie (RFE) et en une seconde partie transmise (TFE) ;
- au moins un échantillon (EA) ;
- un premier étage déflecteur (DF1) propre à balayer selon une première déflexion choisie (X1) la seconde partie transmise (TFE) ou la première partie réfléchie (RFE) du faisceau d'excitation cohérent sur l'échantillon ;
- des premiers moyens de couplage optique propres à recueillir le faisceau de diffusion incohérent de longueur d'onde différente de celle du faisceau d'excitation qui résulte du balayage du faisceau d'excitation cohérent sur l'échantillon ;
- les moyens séparateurs étant propres à séparer ledit faisceau de diffusion incohérent (RD) ainsi recueilli en une première partie réfléchie (RFD) en une seconde partie transmise (TFD) ;
- des seconds moyens formant diaphragme (MD2) comprenant une seconde ouverture variable (D2) conjuguée de la première ouverture (D1) pour filtrer la première partie réfléchie (RFD) ou la seconde partie transmise (TFD) du faisceau de diffusion incohérent ;
- un spectromètre (SPR) possédant une ouverture d'entrée (FX) selon un axe de sortie (A0), ledit spectromètre étant couplé à un module de détection multicanal (MD) comprenant une pluralité d'éléments détecteurs (ED) et des moyens de traitement (UT) pour analyser les signaux perçus par ces éléments détecteurs (ED) ;
- des seconds moyens de couplage optique propres à conduire la première partie réfléchie (RFD) ou la seconde partie transmise (TFD) du faisceau de diffusion incohérent (FD) vers l'ouverture d'entrée du spectromètre (FX) ; et
- un second étage déflecteur (DF2) placé en aval des seconds moyens formant diaphragme et propre à balayer selon une seconde déflexion choisie (X2) l'image spectrale dudit faisceau de diffusion incohérent ainsi filtré sur le module de détection multicanal (MD).

15. Appareil selon la revendication 14, caractérisé en ce que le second étage déflecteur (DF2) est disposé en amont de l'ouverture d'entrée (FX) du spectromètre.

16. Appareil selon la revendication 14, dans lequel le spectromètre est équipé d'au moins de deux étages dispersifs, caractérisé en ce que le second étage déflecteur (DF2) est disposé entre lesdits étages dispersifs du spectromètre.

17. Appareil selon la revendication 14, caractérisé en ce que le second étage déflecteur est disposé à la sortie du spectromètre.

18. Appareil selon l'une quelconque des revendications 14 à 17, caractérisé en ce que la première déflexion (X1) est mono, bi, ou tridimensionnelle.

19. Appareil selon l'une quelconque des revendications 14 à 18, caractérisé en ce que la seconde déflexion (X2) est mono, bi ou tridimensionnelle.

20. Appareil selon l'une quelconque des revendications 14 à 19, caractérisé en ce que les première et seconde déflexions (X1 et X2) sont synchrones et en ce que leurs amplitudes sont asservies l'une par rapport à l'autre de manière à réaliser un grandissement choisi de l'image de la zone balayée de l'échantillon sur le détecteur multicanal.

21. Appareil selon l'une quelconque des revendications 14 à 20, caractérisé en ce qu'il comprend en outre :
- des moyens de filtrage (FAA) du faisceau d'excitation, ayant une largeur de filtrage prédéterminée et étant propres à éliminer une bande spectrale de largeur spectrale prédéterminée centrée sur la fréquence correspondant à la longueur d'onde du faisceau d'excitation ;
- des moyens de capture (AA) pour mesurer le flux lumineux (FED) dépourvu de ladite bande spectrale ainsi éliminée ; et
- des moyens de commande (UC) propres à agir sur le premier étage déflecteur pour rechercher le maximum de signal spectral dans le flux lumineux ainsi capté, ce qui permet d'asservir la mise au point sur la zone de l'échantillon à analyser qui est caractérisée par ledit signal spectral.

## Patentansprüche

1. Spektralapparat, umfassend:
- Einrichtungen (LA) zum Erzeugen eines kohärenten Erregerlichts entsprechend einer Eintrittsachse (A3),
- wenigstens eine erste Probe (EA),
- ein Spektrometer (SPR) mit einer Eintrittsöffung (FX) entsprechend einer Austrittsachse (A0),
- Teilungseinrichtungen (LS1, LS2, LS3) zum Auffangen und Zerlegen des kohärenten Erregerstrahlbündels (FE) in einen reflektierten Teil (RFE) und einen durchgelassenen Teil (TFE), und
- erste optische Kopplungseinrichtungen, um den durchgelassenen Teil (TFE) oder den reflektierten Teil (RFE) des kohärenten Erregerstrahls auf die erste Probe (EA) zu lenken sowie das daraus resultierende inkohärente Diffusionsbündel aufzufangen, wobei die Teilungseinrichtungen besagtes inkohärentes Diffusionsbündel (FD) aufnehmen und in einen reflektierten Teil (RFDEA) und einen durchgelassenen Teil (TFDEA) zerlegen können, und
- zweite optische Kopplungseinrichtungen, um den reflektierten Teil (RFDEA) oder den durchgelassenen Teil (TFDEA) des inkohärenten Diffusionsbündels (FD) auf die Eintrittsöffnung (FX) des Spektrometers zu lenken,
**dadurch gekennzeichnet,** daß die ersten optischen Kopplungseinrichtungen umfassen:
- erste Fokussierungseinrichtungen (FLA1) zum Fokussieren des kohärenten Erregerstrahls (FE) auf eine erste Öffnung mit veränderlichen Dimensionen (D1), eine Blende bildend,
- zweite Fokussierungseinrichtungen (L1) zum Fokussieren des inkohärenten Diffusionsbündels auf eine zweite Öffnung mit veränderlichen Dimensionen (D2), eine Blende bildend, wobei die erste und die zweite öffnung (D1 und D2) optisch zueinander konjugiert sind, und
die Dimensionen der ersten und der zweiten Öffnung (D1 und D2) gewählt werden im Hinblick auf eine Optimierung des räumlichen Auflösungsvermögens des Spektralapparats.

2. Apparat nach Anspruch 1, dadurch gekennzeichnet, daß die erste Probe (EA) unter dem Objektiv (J1) eines Mikroskops angeordnet ist.

3. Apparat nach Anspruch 1 oder Anspruch 2, dadurch gekennzeichnet, daß die ersten optischen Kopplungseinrichtungen (L5,M5) außerdem den reflektierten ersten Teil (RFE) oder den durchgelassenen zweiten Teil (TFE) des kohärenten Erregerstrahls auf die genannte erste Probe (EA) lenken, wobei die Teilungseinrichtungen (LS1) außerdem geeignet sind, das inkohärente Diffusionsbündel, das aus der Beleuchtung von besagter erster Probe (EA) durch den reflektierten ersten Teil (RFE) oder den durchgelassenen zweiten Teil (TFE) des Erregerstrahls resultiert, zu zerlegen in einen reflektierten ersten Teil (RFDEA) und einen durchgelassenen zweiten Teil (TFDEA) und den durchgelassenen zweiten Teil (TFDRFE) oder den reflektierten ersten Teil (RFDTFE) des besagten inkohärenten Diffusionsbündels auf die Eintrittsöffnung (FX) des Spektrometers (SPR) zu lenken.

4. Apparat nach Anspruch 1 oder Anspruch 2, dadurch gekennzeichnet, daß er außerdem eine zweite Probe (ER) umfaßt und daß die ersten optischen Kopplungseinrichtungen (L2,J2) außerdem den reflektierten ersten Teil (RFE) oder den durchgelassenen zweiten Teil (TFE) des kohärenten Erregerstrahls auf die zweite Probe (ER) lenken, wobei die Teilungseinrichtungen (LS1) außerdem geeignet sind, das inkohärente Diffusionsbündel (FDER), resultierend aus der Beleuchtung der zweiten Probe (ER) durch den reflektierten ersten Teil (RFE) oder den durchgelassenen zweiten Teil (TFE) des Erregerstrahls, in einen reflektierten ersten Teil (RFDER) und einen durchgelassenen zweiten Teil (TFDER) zu zerlegen und den durchgelassenen zweiten Teil (TFDER) oder den reflektierten ersten Teil (RFDER) dieses inkohärenten Diffusionsbündels auf die Eintrittsöffnung (FX) des Spektrometers (SPR) zu lenken.

5. Apparat nach Anspruch 3 oder Anspruch 4, dadurch gekennzeichnet, daß die ersten Kopplungseinrichtungen außerdem umfassen:
- erste Verschlußeinrichtungen (01) für den reflektierten ersten Teil (RFE) des kohärenten Erregerstrahls; und
- zweite Verschlußeinrichtungen (02) für den durchgelassenen zweiten Teil (TFE) des kohärenten Erregerstrahls.

6. Apparat nach einem der vorangehenden Ansprüche, dadurch gekennzeichnet, daß er einen Probenträger umfaßt, der horizontal und vertikal verschiebbar angebracht ist, und Steuereinrichtungen zum Steuern der Horizontal- oder Vertikalverschiebungen des Probenträgers.

7. Apparat nach einem der vorangehenden Ansprüche, daß die Teilungseinrichtungen (LS1) ein Strahlteilerplättchen des dichroitischen Typs umfassen, d.h. dessen Teilungsfähigkeit abhängt von der Wellenlänge des einfallenden Strahls, was ermöglicht, die Stokesschen Linien, die Anti-Stokesschen Linien und das Niederfrequenzsignal des RAMAN-Signals zu erlangen bzw. erfassen.

8. Apparat nach einem der vorangehenden Ansprüche, dadurch gekennzeichnet, daß die ersten optischen Kopplungseinrichtungen außerdem Einrichtungen umfassen, die eine optische Kurbel bilden, welche eine Fokussierlinse (L20) umfassen und einen Spiegelmechanismus (M11,M12,M13), drehbar um eine zur Eintrittsachse (A3) parallele Achse, was ermöglicht, die erste Probe (EA) oder die zweite Probe ER) entsprechend einem veränderlichen Winkel (A) zu beleuchten.

9. Apparat nach einem der vorangehenden Ansprüche, dadurch gekennzeichnet, daß die ersten optischen Kopplungseinrichtungen außerdem Einrichtungen (L7,L8) zum Dehnen des kohärenten Strahls umfassen.

10. Apparat nach einem der vorangehenden Ansprüche, dadurch gekennzeichnet, daß die zweiten optischen Kopplungseinrichtungen außerdem Einrichtungen zum Anpassen des Querschnitts des inkohärenten Diffusionsbündels umfassen.

11. Apparat nach einem der vorangehenden Ansprüche, dadurch gekennzeichnet, daß die Fokussiereinrichtungen (FLA1) gebildet werden durch Linsen oder Spiegel, zylindrisch oder spärisch, während die öffnungen (D1 und D2) der blende-bildenden Einrichtungen (MD1 und MD2) rechteckig oder kreisförmig gewählt werden.

12. Apparat nach einem der vorangehenden Ansprüche, dadurch gekennzeichnet, daß die ersten und zweiten optischen Kopplungseinrichtungen auf einer Platine angebracht sind, angeordnet in Form einer Vielzahl von Modulen, leicht umschaltbar und reproduzierbar, in dem Erreger- und Diffusionsstrahlbündel.

13. Apparat nach Anspruch 12, dadurch gekennzeichnet, daß er wenigstens einen ersten Eingang (I1) für ein RAMAN-Spektrometrie-Mikroskop umfaßt und einen Eingang (I3) für eine RAMAN-Makro-Sonde.

14. Spektralapparat nach Anspruch 1, dadurch gekennzeichnet, daß er zusammengefaßt enthalt:
- Einrichtungen (LA) zum Erzeugen eines koharenten Erregerlichts entsprechend einer Austrittsachse (A3) ;
- erste blende-bildende Einrichtungen (MD1), eine erste variabel gewählte Öffnung (D1) umfassend, um den kohärenten Erregerstrahl (FE) räumlich zu filtrieren;
- Teilungseinrichtungen (LS1, LS2) zum Zerlegen des kohärenten Erregerstrahlbündels (FE) in einen reflektierten ersten Teil (RFE) und einen durchgelassenen zweiten Teil (TFE) ;
- wenigstens eine Probe (EA);
- eine erste Ablenkstufe (DF1), um entsprechend einer ersten gewählten Ablenkung (X1) mit dem durchgelassenen zweiten Teil (TFE) oder dem reflektierten ersten Teil (RFE) des kohärenten Erregerstrahls die Probe abzutasten;
- erste optische Kopplungseinrichtungen zum Auffangen des inkohärenten Diffusionsbündels, eine andere Wellenlänge als die des Erregerstrahls aufweisend, resultierend aus der Abtastung der Probe durch den kohärenten Erregerstrahl;
- wobei die Teilungseinrichtungen geeignet sind, besagtes derart aufgefangenes inkohärentes Erregerbündel (RD) in einen reflektierten ersten Teil (RDF) und einen durchgelassenen zweiten Teil (TFD) zu zerlegen;
- zweite blende-bildende Einrichtungen (MD2), eine zu der ersten Öffnung (D1) konjugierte zweite variable Öffnung (D2) umfassend, um den reflektierten ersten Teil (RFD) oder den durchgelassenen zweiten Teil (TFD) des inkohärenten Diffusionsbündels zu filtrieren;
- ein Spektrometer (SPR) mit einer Eintrittsöffnung (FX) entsprechend einer Austrittsachse (A0), wobei besagtes Spektrometer gekoppelt ist mit einem Multikanal-Detektionsmodul (MD), eine Vielzahl Detektionselemente (ED) umfassend und Verarbeitungseinrichtungen (UT) zum Analysieren der durch diese Detektionselemente wahrgenommenen Signale;
- zweite optische Kopplungseinrichtungen zum Lenken des reflektierten ersten Teils (RFD) oder des durchgelassenen zweiten Teils (TFD) des inkohärenten Diffusionsbündels (FD) auf die Eintrittsöffnung (FX) des Spektrometers; und
- eine zweite Ablenkstufe (DF2), angeordnet hinter (en aval) den zweiten blende-bildenden Einrichtungen und geeignet, den Multikanal-Detektions-Modul (MD) entsprechend einer zweiten gewählten Ablenkung (X2) mit dem Spektralbild des genannten filtrierten inkohärenten Diffusionsbündels abzutasten.

15. Apparat nach Anspruch 14, dadurch gekennzeichnet, daß die zweite Ablenkstufe (DF2) vor (en amont) der Eintrittsöffnung (FX) des Spektrometers angeordnet ist.

16. Apparat nach Anspruch 14, bei dem das Spektrometer mit wenigstens zwei Streustufen ausgestattet ist, dadurch gekennzeichnet, daß die zweite Ablenkstufe (DF2) zwischen den beiden Streustufen des Spektrometers angeordnet ist.

17. Apparat nach Anspruch 14, dadurch gekennzeichnet, daß die zweite Streustufe am Ausgang des Spektrometers angeordnet ist.

18. Apparat nach einem der Ansprüche 14 bis 17, dadurch gekennzeichnet, daß die erste Ablenkung (X1) ein-, zwei- oder dreidimensional ist.

19. Apparat nach einem der Ansprüche 14 bis 18, dadurch gekennzeichnet, daß die zweite Ablenkung (X2) ein-, zwei- oder dreidimensional ist.

20. Apparat nach einem der Ansprüche 14 bis 19, dadurch gekennzeichnet, daß die erste und die zweite Ablenkung (X1 und X2) synchron sind, und dadurch, daß ihre Ablenkweiten untereinander geregelt werden, um eine gewählte Vergrößerung des Bildes der abgetasteten Zone der Probe auf dem Multikanal-Detektor herzustellen.

21. Apparat nach einem der Ansprüche 14 bis 20, dadurch gekennzeichnet, daß er außerdem umfaßt:
- Filtriereinrichtungen (FAA) des Erregerstrahls mit einer Filtrierbreite, die festgelegt und geeignet ist, ein Spektralband von festgelegter Spektralbreite, zentriert auf die der Wellenlänge des Erregerstrahls entsprechende Frequenz, zu eliminieren;
- Einfangeinrichtungen, um den Lichtstrom (FED) ohne das besagte, derart eleminierte Spektralband zu messen; und
- Steuereinrichtungen (UC) zum Einwirken auf die erste Ablenkstufe, um den Spektralsignal-Höchstwert in dem derart eingefangenen Lichtstrom zu suchen, was ermöglicht, die Fokussierung bzw. Scharfeinstellung auf die Zone der zu analysierenden Probe zu regeln, die durch besagtes Spektralsignal gekennzeichnet ist.

## Claims

1. Spectrometry apparatus comprising:
- means (LA) for producing a coherent exciting beam along an input axis (A3);
- at least one first sample (EA);
- a spectrometer (SPR) having an input aperture (FX) along an output axis (A0);
- separating means (LS1, LS2, LS3) suitable for receiving the coherent exciting beam (FE) and separating it into a reflected part (RFE) and a transmitted part (TFE); and
- first optical coupling means suitable for conducting the transmitted part (TFE) or the reflected part (RFE) of the coherent exciting beam onto the first sample (EA), and for receiving the incoherent diffusing beam which results therefrom, the separating means being suitable for receiving said incoherent diffusing beam (FD) and separating it into a reflected part (RFDEA) and a transmitted part (TFDEA); and
- second optical coupling means suitable for conducting the reflected part (RFDEA) or the transmitted part (TFDEA) of the incoherent diffusing beam (FD) towards the input aperture (FX) of the spectrometer;
characterised in that the first optical coupling means comprise:
- first focusing means (FLA1) suitable for focusing the coherent exciting beam (FE) on a first aperture of variable dimensions (D1), forming a diaphragm;
- second focusing means (L1) suitable for focusing the incoherent diffusing beam on a second aperture of variable dimensions (D2), forming a diaphragm, the dimensions of the first and second apertures (D1 and D2) being optically connected in relation to one another and the dimensions of the first and second apertures (D1 and D2) being selected with a view to optimising the spatial resolution of the spectrometry apparatus.

2. Apparatus according to Claim 1, characterised in that the first sample (EA) is placed under the lens (J1) of a microscope.

3. Apparatus according to Claim 1 or Claim 2, characterised in that the first optical coupling means (L5, M5) furthermore conduct the first reflected part (RFE) or the second transmitted part (TFE) of the coherent exciting beam onto said first sample (EA), the separating means (LS1) being furthermore suitable for separating the incoherent diffusion beam which results from the illumination of said first sample (EA) by the first reflected part (RFE) or the second transmitted part (TFE) of the exciting beam into a first reflected part (RFDEA) and a second transmitted part (TFDEA) and for conducting the second transmitted part (TFDRFE) or the first reflected part (RFDTFE) of said incoherent diffusion beam onto the input aperture (FX) of the spectrometer (SPR).

4. Apparatus according to Claim 1 or Claim 2, characterised in that it furthermore comprises a second sample (ER) and in that the first optical coupling means (L2, J2) furthermore conduct the first reflected part (RFE) or the second transmitted part (TFE) of the coherent exciting beam onto the second sample (ER), the separating means (LS1) furthermore being suitable for separating the incoherent diffusion beam (FDER) which results from the illumination of the second sample (ER) by the first reflected part (RFE) or the second transmitted part (TFE) of the exciting beam in a first reflected part (RFDER) and a second transmitted part (TFDER) and for conducting the second transmitted part (TFDER) or the first reflected part (RFDER) of said incoherent diffusion beam onto the input aperture (FX) of the spectrometer (SPR).

5. Apparatus according to Claim 3 or Claim 4, characterised in that the first coupling means furthermore comprise:
- first means forming a shutter (01) for the first reflected part (RFE) of the coherent exciting beam; and
- second means forming a seal (02) for the second transmitted part (TFE) of the coherent exciting beam.

6. Apparatus according to any one of the preceding claims, characterised in that it comprises a sample holder mounted for movement in horizontal and vertical translations and control means suitable for controlling the horizontal or vertical translations of the sample holder.

7. Apparatus according to any one of the preceding claims, characterised in that the separating means (LS1) comprise a separating blade of the dichroic type, that is, the separating power of which is a function of the wavelength of the incident beam, which permits the required Stokes rays, anti-Stokes rays and the low frequency signal of the RAMAN signal to be obtained.

8. Apparatus according to any one of the preceding claims, characterised in that said first optical coupling means furthermore comprise means forming an optical lever comprising a focusing lens (L20) and a mechanism with mirrors (M11, M12, M13) which is rotatable about an axis which is parallel to the input axis (A3), which allows the first (EA) or second (ER) sample to be illuminated at a variable angle (A).

9. Apparatus according to any one of the preceding claims, characterised in that the first optical coupling means furthermore comprise means forming an expander (L7, L8) of the coherent exciting beam.

10. Apparatus according to any one of the preceding claims, characterised in that the second optical coupling means furthermore comprise means forming an adapter of the aperture (L10, L11, L12) of the incoherent diffusion beam.

11. Apparatus according to any one of the preceding claims, characterised in that the focusing means (FLA1) are formed of lenses or cylindrical or spherical mirrors whereas the apertures (D1 and D2) of the means forming the diaphragm (MD1 and MD2) are selected so as to be rectangular or circular.

12. Apparatus according to any one of the preceding claims, characterised in that the first and second optical coupling means are arranged on a plate and articulated in the form of a plurality of modules which are easily switchable and reproducible on the exciting and diffusion beam.

13. Apparatus according to Claim 12,
characterised in that it comprises at least a first input (I1) for a RAMAN spectrometry microscope and an input (13) for a RAMAN macro sensor.

14. Spectrometry apparatus according to Claim 1, characterised in that it comprises, in combination:
- means (LA) for producing a coherent exciting beam along an output axis (A3);
- first means forming a diaphragm (MD1) comprising a first selected variable aperture (D1) for the spatial filtering of the coherent exciting beam (FE);
- separating means (LS1, LS2) suitable for separating a coherent exciting beam (FE) and a first reflected part (RFE) and a second transmitted part (TFE);
- at least one sample (EA);
- a first deflector stage (DF1) suitable for sweeping the second transmitted part (TFE) along a first selected deflection path (X1) or the first reflected part (RFE) of the coherent exciting beam onto the sample;
- first optical coupling means suitable for receiving the incoherent diffusion beam of a different wavelength than that of the exciting beam which results from the sweeping of the coherent exciting beam onto the sample;
- separating means being suitable for separating said incoherent diffusion beam (RD) thus received into a first reflected part (RFD) and a second transmitted part (TFD);
- second means forming a diaphragm (MD2) comprising a second variable aperture (D2) connected to the first aperture (D1) to filter the first reflected part (RFD) or the second transmitted part (TFD) of the incoherent diffusion beam;
- a spectrometer (SPR) having an input aperture (FX) along an output axis (AO), said spectrometer being coupled to a multi-channel detection module (MD) comprising a plurality of detecting elements (ED) and treatment means (UT) to analyse the signals perceived by these detector elements (ED);
- second optical coupling means suitable for conducting the first reflected part (RFD) or the second transmitted part (TFD) of the incoherent diffusion beam (FD) towards the input aperture of the spectrometer (FX); and
- a second deflector stage (DF2) placed downstream of second means forming the diaphragm and suitable for sweeping the spectral image of said incoherent diffusion beam which has been filtered in this manner onto the multi-channel detection module (MD) along a second selected deflection path (X2).

15. Apparatus according to Claim 15, characterised in that the second deflector stage (DF2) is disposed upstream of the input aperture (FX) of the spectrometer.

16. Apparatus according to Claim 14, in which the spectrometer is provided with at least two dispersive stages, characterised in that the second deflector stage (DF2) is arranged between said dispersive stages of the spectrometer.

17. Apparatus according to Claim 14, characterised in that the second deflector stage is arranged at the output of the spectrometer.

18. Apparatus according to any one of Claims 14 to 17, characterised in that the first deflection path (XL) is one-dimensional, two-dimensional or three-dimensional.

19. Apparatus according to any one of Claims 14 to 18, characterised in that the second deflection path (X2) is one-dimensional, two-dimensional or three-dimensional.

20. Apparatus according to any one of Claims 14 to 19, characterised in that the first and second deflection paths (X1 and X2) are synchronous and in that the amplitudes thereof are controlled in relation to one another in such a manner as to produce a selected enlargement of the image of the swept zone of the sample on the multi-channel detector.

21. Apparatus according to any one of Claims 14 to 20, characterised in that it furthermore comprises:
- filtering means (FAA) of the exciting beam, having a predetermined filtering width and being suitable for eliminating a spectral band or a predetermined spectral width centred on the frequency corresponding to the wavelength of the exciting beam;
- capturing means (AA) for measuring the luminous flux (FED) without the said spectral band which has been thus eliminated; and
- control means (UC) suitable for acting on the first deflector stage to obtain the spectral signal maximum in the luminous flux thus captured, which permits control of focusing on the zone of the sample to be analysed, which is characterised by said spectral signal.
